# EUROPÄISCHE PATENTSCHRIFT

(11) **EP 3 416 787 B1**
(45) Veröffentlichungstag und Bekanntmachung des Hinweises auf die Patenterteilung: **07.12.2022**
(21) Anmeldenummer: 17705853.4
(22) Anmeldetag: 15.02.2017
(51) Int. Cl.: B25J 15/04, F16B 2/02, F16M 11/04, F16M 13/02

(54) **EFFEKTOREINHEIT FÜR EINEN ROBOTER, ARBEITSVORRICHTUNG MIT EINEM ROBOTER UND VERFAHREN ZUM WECHSELN EINES EFFEKTORS BEI ROBOTERN**
EFFECTOR UNIT FOR A ROBOT, WORK IMPLEMENT COMPRISING A ROBOT, AND METHOD FOR REPLACING AN EFFECTOR IN ROBOTS
DISPOSITIF EFFECTEUR POUR UN ROBOT, DISPOSITIF DE TRAVAIL POURVU D'UN ROBOT ET PROCÉDÉ DE CHANGEMENT D'EFFECTEUR DANS DES ROBOTS

(30) Priorität: 15.02.2016 DE 102016001627; 09.04.2016 DE 102016004087
(43) Veröffentlichungstag der Anmeldung: 26.12.2018
(73) Patentinhaber: Kastanienbaum GmbH, 80538 München (DE)
(72) Erfinder: HADDADIN, Sami, 30173 Hannover (DE)
(74) Vertreter: Habermann, Hruschka & Schnabel
(86) Internationale Anmeldenummer: PCT/EP2017/053442
(87) Internationale Veröffentlichungsnummer: WO 2017/140749

(56) Entgegenhaltungen:
- EP-A1- 2 548 706
- WO-A1-2014/170355
- DE-A1-102009 039 104
- DE-U1- 29 609 018
- JP-A- S60 123 288
- US-A- 4 591 198
- US-A- 5 360 249
- US-A1- 2010 314 895
- US-B1- 6 422 441
- US-B1- 8 226 140

## Beschreibung

Die vorliegende Erfindung betrifft eine Effektoreinheit für einen Roboter, eine Arbeitsvorrichtung mit einem Roboter und mit einem Effektor sowie ein Verfahren zum Wechseln eines Effektors an einem Roboter.

Effektoreinheiten bei Robotern setzen sich aus einem an einem Endglied eines Manipulators bzw. eines Roboterarms, eines beispielsweise programmierbaren, mehrachsigen Roboters, anordenbaren Tragelement und einem Effektor zusammen, die mittels einer Kupplungsvorrichtung miteinander verbindbar sind.

Kupplungsvorrichtungen im Bereich der Robotik sind in den unterschiedlichsten Ausgestaltungen bekannt und dienen dazu, eine Automatisierung beim Wechseln von diversen Effektoren bzw. Werkzeugen zur Verfügung zu stellen. Bei Industrierobotern sind derartige Werkzeugwechsler mit roboterseitigen und werkzeugseitigen Kupplungselementen versehen, die formschlüssig ineinander greifen und durch einen Verriegelungsmechanismus miteinander verliersicher und kraftübertragend, aber lösbar verbunden werden, wobei der Verriegelungsmechanismus einen eigenen Antrieb aufweist, der in dem Werkzeugwechsler integriert sein kann. Derartige Kupplungsprinzipien zeigen beispielsweise die WO 99/19121 A1, die eine Wechselkupplung mit Verriegelungselementen in Form von Kugeln betrifft, oder die DE 202 08 060 U1, die einen Verriegelungsmechanismus in der Form eines Schließrings mit radial angeordneten, elektromechanisch angetriebenen Klauenelementen offenbart.

Ebenso ist es bekannt, ineinander greifende Kupplungselemente mittels einer elektromagnetischen Verriegelung miteinander zu verbinden, wie beispielsweise die DE 10 2005 052 627 A1 lehrt. Aus der DE 10 2007 030 035 A1 ist darüber hinaus ein Greifwerkzeug mit einem Fingerwechselsystem bekannt, bei dem die Greiferfinger mittels eines Blähkörpers, d.h. auf pneumatische Weise verriegelt werden.

Mit Federkraft beaufschlagte Kupplungs- bzw. Rastelemente für Werkzeugwechsler sind beispielsweise aus der JP 2011/189415, der JP 2010/120140 oder der DE 20 2011 052 430 U1 bekannt.

Die vorhergehend geschilderte Kupplungstechnik kommt bevorzugt bei programmierbaren Industrierobotern zum Einsatz, die positionsgesteuerte Achsen aufweisen und in der Regel für entsprechend hohe Traglasten ausgelegt sind. Zur Positionsregelung müssen die von außen auf den Industrieroboter einwirkenden Kräfte gemessen werden, die die Basis für ein gewünschtes dynamisches Verhalten bilden, das über eine inverse Kinematik dann auf den Roboter übertragen wird, auch Admittanzregelung genannt.

Selbstredend ist der Programmieraufwand für derartige Industrieroboter zur Verwirklichung des Einsatzes von Werkzeugwechselsystemen bzw. Effektoreinheiten unter Verwendung mehrerer unterschiedlicher Effektoren sehr hoch. Die Positionsregelung muss hochgenau erfolgen, damit die einzelnen roboterseitigen und werkzeug- bzw. effektorseitigen Kupplungselemente, zusätzlich zu gegebenenfalls vorhandenen Medienkupplungen, auf Grund des zu realisierenden Formschlusses passgenau ineinander greifen können. Diese Roboter sind auf Grund des zum Einsatz kommenden Regelprinzips daher nicht in der Lage, Fehler oder Abweichungen zu erkennen, beispielsweise wenn aus irgendwelchen Gründen das roboterseitige Kupplungselement nicht genau auf das werkzeugseitige Kupplungselement ausgerichtet ist, und entsprechend darauf zu reagieren.

Ein einwandfreier Wechsel von Effektoren ist daher nur möglich, wenn die Effektoren exakt in der durch die Programmierung vorgegebenen Position, beispielsweise in einer im Arbeitsbereich des Roboters stationär angeordneten Haltevorrichtung, abgelegt sind. Bereits die Verwendung eines Werkzeugmagazins mit mehreren austauschbaren, ggfs. unterschiedlichen Werkzeugen bzw. Effektoren erhöht den Programmieraufwand erheblich und damit die Fehleranfälligkeit.

Weitere Greiferwechselmechanismen für Roboter sind beispielsweise aus den folgenden Druckschriften bekannt. Die DE 10 2009 039 104 A1 und die JP S60-123288 offenbaren jeweils ein Verfahren und eine Vorrichtung, bei denen Greiffinger dadurch an Tragelementen eines Greifermechanismus lösbar befestigt werden können, indem der Roboter linear, in der Regel nach unten, in eine Greiferwechselstation einfährt, so dass über einen federnden Rastmechanismus die Greiffinger verriegelt werden können. Im Gegensatz hierzu offenbaren die US 5,360,249 und die US 4,591,198 Greifermechanismen, die den eigenen Antrieb zum Zuspannen der Greiffinger nutzen, um diese auch im Zuge eines Wechsels aufzunehmen. Zur Verriegelung können u.a. hydraulisch aktivierbare Rastelemente vorgesehen sein.

Grundsätzlich zeichnen sich die aus dem geschilderten Stand der Technik bekannten Kupplungsmechanismen durch eine teilweise sehr komplexe Mechanik aus. Die Notwendigkeit von in der Regel elektromechanisch betätigten Antrieben zur Aktivierung der unterschiedlichen Verriegelungselemente benötigt eine eigene Ansteuerung sowie Energieversorgung, wodurch sich die Fehleranfälligkeit dadurch zwangsläufig erhöht. Darüber hinaus besitzen die Kupplungselemente konstruktionsbedingt ein hohes Eigengewicht.

Ausgehend davon ist es eine Aufgabe der vorliegenden Erfindung eine verbesserte Kupplungstechnik für Roboter zur Verfügung zu stellen. Insbesondere ist es eine Aufgabe der vorliegenden Erfindung, ein Werkzeugwechselsystem bzw. eine entsprechende Arbeitsvorrichtung für Robotersysteme zur Verfügung zu stellen, wie bevorzugt für Roboter der Leichtbauweise.

Gelöst werden diese Aufgaben mit einer Effektoreinheit mit den Merkmalen nach Anspruch 1 sowie mit einer Arbeitsvorrichtung mit einem Roboter und mit einer solchen Effektoreinheit mit den Merkmalen nach Anspruch 18 Darüber hinaus schlägt die Erfindung in diesem Zusammenhang ein Verfahren zum Wechseln eines Werkzeugelements oder eines Effektors an einem Endglied eines Roboters mit den Merkmalen nach Anspruch 24 vor.

Ein Aspekt der Erfindung betrifft eine Effektoreinheit für einen Roboter mit einem an einem Endglied des Roboters angeordneten Tragelement, mit einem Effektor, der an dem Tragelement über form- und/oder kraftschlüssig ineinander greifende Kupplungselemente befestigbar ist, und mit einem Verriegelungsmechanismus, der ein Kupplungselement des Effektors mit einem Kupplungselement des Tragelements lösbar und verliersicher verbindet. Das Tragelement im Sinne der Erfindung dient folglich der wieder lösbaren Aufnahme eines Effektors unabhängig von dessen eigentlicher Ausgestaltung und funktionaler Bestimmung.

Gemäß der Erfindung ist es vorgesehen, dass das Tragelement relativ zu dem Endglied des Roboterarms bewegbar angeordnet ist. Die Kupplungselemente sowohl des Tragelements als auch des Effektors sind in einer gemeinsamen axialen Ausrichtung verbindbar, die parallel zu der Bewegungsrichtung des Tragelements angeordnet ist. Gemäß der Kupplungselemente dabei so ausgestaltet und ausgebildet sein, dass sie mittels einer rotatorischen Verlagerungsbewegung des Roboters, die bspw. zu einer Schwenkbewegung des Tragelements führt, und/oder einer translatorischen Verlagerungsbewegung des Roboters, die bspw. zu einer translatorischen Bewegung des Tragelements in Richtung zu seiner Längserstreckung oder zu einer translatorischen Bewegung des Tragelements quer zu seiner Längserstreckung oder Kombinationen davon führt, verbunden oder wieder entkoppelt werden können.

Infolge einer Kupplung des Tragelements mit dem Effektor kann so eine etwaige Betätigungsrichtung des Effektors mit der Bewegungsrichtung des diesem zugeordneten Tragelements ausgerichtet werden.

Vorzugsweise ist an dem Endglied ein Parallelgreifmechanismus vorgesehen, der aus zwei linear aufeinander zu bzw. voneinander weg bewegbaren Tragelementen gebildet ist, wobei die lineare Zustellung die Bewegungsrichtung vorgibt.

Der Effektorträger bzw. das Tragelement kann in der Regel eine Längserstreckung aufweisen, die im Wesentlichen in Richtung einer translatorischen Bewegungsrichtung des Endglieds des Manipulators verlaufen soll.

Unter Effektor soll im Rahmen der Erfindung prinzipiell jedes Element verstanden werden, mit Hilfe von dem der Roboter mit seiner Umwelt interagiert. Dies umfasst Werkzeugelemente jeder Art, wie beispielsweise Schraubköpfe zum Montieren von Gegenständen, Spritzpistolen zum Lackieren, Lötkolben zum Herstellen von elektrischen Kontakten, bis hin zu Laseroptiken, Kameras und dergleichen, die unmittelbar mit dem Tragelement gekoppelt werden.

In einer bevorzugten Ausführungsform der Erfindung können die Effektoren als einfache Greiffinger oder -backen zum Greifen von beliebigen Gegenständen ausgebildet sein.

Auf diese Art und Weise wird es möglich, dass sich der Roboter, insbesondere wenn dieser mit einer integrierten Nachgiebigkeitsregelung versehen ist, jeweils Greiffinger mit unterschiedlicher Ausgestaltung und Konturierung der Greifflächen für den jeweiligen Einsatzzweck selbst montieren kann. So geht gemäß der Erfindung die Funktionalität der Effektoreinheit über reine "Pick & Place"-Tätigkeiten hinaus, für die reine Greiffinger ausreichen; der Effektor kann auch allgemein als ein Greifmechanismus fungieren, der in der Lage ist, jegliche Art von Werkzeugen, insbesondere handelsübliche handbetätige oder üblicherweise in der Hand gehaltene Elektrowerkzeuge, wie bspw. eine Bohrmaschine, zu greifen, entweder unmittelbar über entsprechend ausgestaltete Greiffinger oder -backen, oder mittelbar über Werkzeughalterungen, die die Werkzeuge tragen und von den Greifeffektoren gegriffen werden. Unterschiedliche Effektoren dienen folglich als Adapter für die zu greifenden unterschiedlichen Gegenstände.

Gemäß der Erfindung ist es vorgesehen, dass der Verriegelungsmechanismus an dem Tragelement derart angeordnet ist, dass er für ein externes Betätigungselement frei zugänglich und darüber hinaus so ausgebildet und ausgestaltet ist, dass er von diesem externen Betätigungselement auf eine aktive oder passive Art und Weise betätigbar sein kann.

Unter einem externen Betätigungselement soll gemäß der Erfindung ein aktives oder passives Betätigungselement verstanden werden, das nicht Bestandteil des Roboters bzw. der Effektoreinheit ist. Als aktives Betätigungselement kommen bspw. Aktuatoren in Frage, die mit dem Verriegelungsmechanismus zum Zwecke des Verriegelns der Kupplungselemente in Wechselwirkung treten, wie bspw. pneumatisch oder elektrisch angetriebene Druckstößel. Passive Betätigungselemente umfassen bspw. ortsfeste Widerlager jeglicher Ausgestaltung.

Gemäß einer bevorzugten Ausführungsform der Erfindung soll der Verriegelungsmechanismus so ausgebildet und ausgestaltet sein, dass er unter Anlage an ein solches Widerlager durch eine Verlagerungsbewegung des Roboters betätigbar ist. Das Widerlager kann sich im unmittelbaren Bereich eines dem Roboter zugeordneten Arbeitsraums befinden, innerhalb von dem der Roboter agiert; z. Bsp. kann es sich einfach um eine Tischkante oder ein Teil eines Maschinengehäuses im Bereich einer Arbeitsstation des Roboters handeln, gegen die der Verriegelungsmechanismus durch eine entsprechende Bewegung des Roboters geführt wird.

Darüber hinaus kann es sich bei dem Widerlager auch um ein Element handeln, mit dem der Verriegelungsmechanismus in einen lösbaren Eingriff gelangen kann, um diesen wieder zu lösen.

Die Effektoreinheit dient für sich der lösbaren Verbindung zwischen dem Effektor bzw. dem Werkzeugelement oder Greifelement und dem hierfür als Aufnahmebasis dienenden Tragelement, das lösbar an dem Endglied des Roboters befestigbar oder mit diesem unlösbar verbunden ist, wobei jedoch das Tragelement über einen entsprechenden Antriebs- bzw. Betätigungsmechanismus relativ gegenüber dem Endglied bewegbar gelagert ist. Das Endglied mit dem zumindest einen Tragelement ohne den von diesem aufzunehmenden Effektor bildet das distale Ende eine Roboterarms, vorzugsweise eines mehrachsigen Roboterarms der Leichtbauweise.

Die Effektoreinheit gemäß der Erfindung bildet folglich eine eigenständige universelle Kupplungsvorrichtung aus, die im Sinne einer variablen Funktionalität die Anpassung des Roboters an unterschiedliche Einsatzzwecke über die selektive Aufnahme von diversen Effektoren ermöglicht.

In einer Ausführungsform kann das Kupplungselement des Tragelements als eine Öffnung zur Aufnahme des Kupplungselements des Effektors mit einer durch den Verriegelungsmechanismus veränderlichen Öffnungsweite ausgebildet sein. Der Verriegelungsmechanismus soll dabei so ausgestaltet sein, dass er bei aktiver oder passiver Betätigung durch das externe Betätigungselement die Öffnung, die prinzipiell eine Form aufweist, die der Aufnahme eines entsprechend formkomplementären Kupplungselements des Effektors dient, verengt, um dieses Kupplungselement verliersicher einzuspannen.

Vorzugsweise handelt es sich bei der Öffnung um eine im Wesentlichen kreisrunde Ausnehmung und bei dem Kupplungselement des Effektors um einen entsprechend zylinderförmig geformten Zapfen, der dann in der Öffnung verliersicher und drehsicher verspannt werden kann. Es sind jedoch auch andere Geometrien denkbar, wie beispielweise zumindest teilweise konusförmige Kupplungselemente oder solche, die einen Hinterschnitt aufweisen, der im nicht verspannten Zustand von den Kupplungselementen überbrückt werden kann.

Gemäß der Erfindung soll zwischen der Öffnung des Tragelements und dem Zapfen des Effektors eine solche Spielpassung vorliegen, die bei Aufnahme des Effektors durch den Roboter eine Verbindung zwischen dem Tragelement und dem Effektor gestattet, so dass der Effektor an dem Tragelement während jeder Bewegung des Roboters im freien Raum zu Transportzwecken ausreichend sicher gehalten bleibt, bevor erst durch eine Betätigung des Verriegelungsmechanismus die Öffnung dann verengt und der Effektor so fixiert wird, dass sich über diesen auch Kräfte übertragen lassen bzw. die für den Effektor vorgesehene Tätigkeit durchgeführt werden kann, ohne dass die Gefahr eines Lösens des Effektors besteht.

Die Bereitstellung einer solchen Spielpassung hat den Vorteil, dass ein Roboter, der bspw. eine integrierte Nachgiebigkeitsregelung aufweist, die zunächst lockere Verbindung zwischen Öffnung und Zapfen selbst fügen kann. Dies ist bei einer Passung, die den Effektor bzw. das Werkzeugelement von Anfang an selbständig festzuhalten vermag, wie bei den geschilderten Robotersystemen aus dem Stand der Technik, nicht möglich.

Gemäß einer Ausführungsform der Erfindung ergibt sich eine durch den Verriegelungsmechanismus veränderliche Öffnungsweite dadurch, dass die Öffnung zumindest teilweise von zwei zueinander beweglichen Schenkeln des Tragelements eingeschlossen ist, wobei vorzugsweise die Schenkel federnd ausgebildet sind und diese mittels des Verriegelungsmechanismus entgegen der Federwirkung bewegbar sind. Die Federwirkung lässt sich beispielsweise dadurch erzeugen, dass Aussparungen im Körper des Tragelements an entsprechenden Stellen und mit einer entsprechenden Form und Dimensionierung vorgesehen sind.

Die Kupplungselemente sowohl des Tragelements als auch des Effektors können gemäß der Erfindung zumindest abschnittsweise eine komplementäre Zylinder-, Keil- oder Konusform aufweisen. Darüber hinaus kann zwischen den Kupplungselementen zumindest ein Rastmechanismus vorgesehen sein. Denkbar hierfür ist bspw. ein an dem Zylinderabschnitt des Effektors radial gelagerter Federzapfen oder -bolzen, der in eine entsprechende radiale Öffnung in der Aufnahmeöffnung für den Zylinderabschnitt des Tragelements einrasten und der durch eine einfache Translationsbewegung des Kupplungselements gelöst werden kann.

In einer bevorzugten Ausführungsform sind die Kupplungselemente derart ausgestaltet, dass zwischen diesen ein Bajonettverschlussmechanismus ausgebildet werden kann. Dieser kann dann bspw. dadurch bewerkstelligt werden, dass der Roboter durch eine seitlich gerichtete translatorische Bewegung das Tragelement mit dem Effektor in Verbindung bringt und dann anschließend durch eine Schwenkbewegung des Tragelements den Bajonettverschlussmechanismus verschließt.

Neben den genannten keil-, zylinder- oder konusförmigen Spannelementen oder Schraubverbindungen ist es in einer weiteren bevorzugten Ausführungsform der Erfindung vorgesehen, dass an dem Tragelement außenseitig ein Hebel schwenkbar gelagert ist, der in der Art eines Schnellspanners die Öffnung im Tragelement zu verengen vermag.

Diese Ausführung eines Verriegelungsmechanismus ermöglicht auf besonders einfache Art und Weise, dass der Hebel unter Anlage an ein Widerlager durch eine einfache Relativbewegung des Roboters gegenüber dem Widerlager betätigbar ist.

Insbesondere, jedoch nicht ausschließlich, soll daher die erfindungsgemäße Effektoreinheit bei programmierbaren, mehrachsigen Robotern, bevorzugt bei Leichtbaurobotern zum Einsatz kommen, die eine entsprechende Nachgiebigkeitsregelung aufweisen.

Die Nachgiebigkeitsregelung basiert zum Beispiel auf der sogenannten Impedanzregelung, die im Gegensatz zu der bereits erwähnten Admittanzregelung eine Drehmomentenregelung auf Gelenkebene zum Gegenstand hat. Hierbei werden in Abhängigkeit eines gewünschten dynamischen Verhaltens und unter Berücksichtigung der Abweichungen einer tatsächlichen Lage von einer definierten Solllage und/oder einer tatsächlichen Geschwindigkeit von einer Sollgeschwindigkeit und/oder einer tatsächlichen Beschleunigung von einer Sollbeschleunigung Kräfte bzw. Momente bestimmt, die dann über die bekannte Kinematik des Roboters, die sich aus der Anzahl und Anordnung der Gelenke und Achsen und damit Freiheitsgrade ergibt, auf entsprechende Gelenkdrehmomente abgebildet werden, die über die Drehmomentenregelung eingestellt werden. Die hierfür in den Gelenken integrierte Momentensensorik erfasst das jeweils am Abtrieb des Getriebes der im Gelenk befindlichen Antriebseinheit vorherrschende eindimensionale Drehmoment, das als Messgröße die Elastizität des Gelenks im Rahmen der Regelung berücksichtigen kann. Insbesondere erlaubt die Verwendung einer entsprechenden Drehmomentensensorik, im Gegensatz zur Verwendung nur eines Kraftmomentensensors am Endeffektor, wie bei der Admittanzregelung, auch die Messung von Kräften, die nicht auf den Endeffektor, sondern auf die Glieder des Roboters sowie auf einen vom dem Roboter gehaltenen oder durch diesen zu bearbeitenden Gegenstand ausgeübt werden. Die Drehmomente können auch über Kraftsensoren in der Struktur und/oder Basis des Robotersystems gemessen werden. Insbesondere können auch Gelenkmechanismen zwischen den einzelnen Achsen des Manipulators zum Einsatz kommen, die eine mehrachsige Drehmomenterfassung erlauben. Denkbar sind auch translatorische Gelenke, die mit entsprechenden Kraftsensoren ausgestattet sind.

Die auf diese Weise realisierte Nachgiebigkeitsregelung erweist sich für die vorliegende Erfindung als vorteilhaft, da ein solcher Roboter über eine gesteuerte Eigenbewegung den Verriegelungsmechanismus auslösen bzw. betätigen kann. Darüber hinaus ist ein solcher Roboter in der Lage, die unterschiedlichen Werkzeugelemente bzw. Effektoren zu "suchen" und beschädigungsfrei zu "ertasten", was sich für einen automatischen Werkzeugwechsel als günstig erweist. Auf diese Art und Weise können beliebig viele, funktional unterschiedliche Werkzeugelemente, wie beispielsweise die vorhergehend erwähnten Greifkonturen, die in Bezug auf unterschiedliche Einsatzzwecke und für zu greifende unterschiedliche Gegenstände und Werkzeuge ausgestaltet sind, in einem Magazin abgelegt werden, das zumindest einem Roboter zugeordnet und in unmittelbarer Umgebung davon angeordnet ist.

Ein weiterer Vorteil der Nachgiebigkeitsregelung liegt darin, dass diese grundsätzlich eine ungenauere bzw. nicht genau positionierte Kupplung zwischen den Kupplungselementen des Tragelements und des Effektors erlaubt, wodurch die oben genannten Kupplungsalternativen mit höheren Toleranzen gefertigt werden können. Dadurch bedingte Ungenauigkeiten können durch eine entsprechende nachgiebige Regelung über eine damit verbundene Reduktion der Kontaktkräfte in der Kupplung ausgeglichen werden. So können z.B. auch Greifeffektoren mit beliebigen Konturen und Hinterschnitten, die sich durch das additive 3D-Druckverfahren herstellen lassen, verwendet werden.

Bei der Ausführungsform mit einem Hebel dient das extern befindliche Widerlager sozusagen als ein passives Betätigungselement, gegen das das mit dem Effektor vorerst lose in Verbindung stehende Tragelement von dem Roboter bewegt bzw. angestellt wird, um den Verriegelungsmechanismus zur Anlage bzw. in Kontakt mit dem Widerlager zu bringen. Der Roboter drückt dabei anschließend den Verriegelungsmechanismus gegen das Widerlager mit einer solchen Kraft oder bewegt diesen mit einer solchen gesteuerten Bewegung daran entlang, dass der Verriegelungsmechanismus dadurch in die geschlossene Stellung überführt wird, und damit der Effektor mit dem Tragelement verspannt bzw. die Verbindung von deren Kupplungselementen blockiert wird.

Unter Verwendung eines vorzugsweise als Schnellspannverschluss ausgebildeten Hebels kann es bereits ausreichen, dass der Roboter die Effektoreinheit gegen ein sich in unmittelbarer Nähe des Arbeitsbereichs des Roboters befindliches Widerlager bewegt und drückt, beispielsweise gegen eine Tischkante einer Fließbearbeitungsvorrichtung oder gegen einen Gehäuseabschnitt einer Maschine, mit denen der Roboter zusammenarbeitet.

Gemäß einer bevorzugten Ausführungsform weist der Hebel eine äußere Kontur auf, die an dem Widerlager kontinuierlich entlang bewegt werden kann.

Als Widerlager, vorzugsweise im unmittelbaren Bereich eines Magazins für den Wechsel mit mehreren Werkzeugelementen, ist auch ein drehbarer Wälzkörper denkbar, an dem die Effektoreinheit unter Anlage des Verriegelungshebels mittels einer gesteuerten Schwenk- oder Linearbewegung des Roboters entlang geführt und dadurch der Hebel zu dem Tragelement hin gedrückt werden kann.

Darüber hinaus ist es auch denkbar, dass das externe Betätigungselement in der Form eines Aktuators aktiv auf den Verriegelungsmechanismus Einfluss nimmt. Denkbar für solche Aktuatoren ist jede Art von Stellgliedern, wie beispielsweise Druckstößel, die den Hebel gegen das Tragelement andrücken, nachdem der Roboter die Effektoreinheit vorher in eine entsprechende Relativposition gegenüber einem solchen aktiven Aktuator gebracht hat.

Zum Lösen des Verriegelungsmechanismus, nachdem der für den Effektor gedachte Arbeitsschritt abgeschlossen ist und ein Effektorwechsel ansteht, kann dieser wieder zur Anlage an ein passives Widerlager gebracht werden, um über eine Relativbewegung des Roboters gegenüber dem Widerlager den Verriegelungsmechanismus zu öffnen.

Bei der Verwendung eines Hebels kann das freie Ende des Hebels an einer Kante eingehakt werden, wobei die Eigenbewegung des Roboters dann so programmiert ist und durchgeführt wird, dass der Hebel aufgezogen und die feste Verbindung zwischen dem Kupplungselement des Tragelements und dem Kupplungselement des Effektors aufgelöst wird. Die Effektoreinheit kann anschließend einer entsprechenden Haltevorrichtung für den Wechsel des Effektors zugeführt werden.

In einer bevorzugten Ausführungsform gemäß der Erfindung weist der Hebel eine Eingriffsöffnung für den Aktuator auf, der für diesen Fall beispielsweise als ein stationärer Zapfen ausgebildet und vorzugsweise horizontal ausgerichtet ist. Der Roboter bewegt die Effektoreinheit so, dass die Eingriffsöffnung des Hebels über den Zapfen geschoben und mittels einer Relativbewegung der Effektoreinheit gegenüber dem Zapfen der Hebel aufgezogen wird.

Ein wesentlicher Vorteil der Effektoreinheit gemäß der Erfindung liegt darin, dass auf einfache Art und Weise, bevorzugt ausschließlich über eine Eigenbewegung des Roboters, ein Effektor- oder Werkzeugwechsel automatisch durchführbar ist.

Die Erfindung betrifft demzufolge auch eine entsprechende Arbeitsvorrichtung mit einem Roboter, mit zumindest einem Effektor und mit einer Effektoreinheit, wobei die eine Kupplungsvorrichtung bildende Effektoreinheit gemäß den vorhergehend geschilderten Ausführungsformen ausgebildet ist.

Da durch die programmierten Eigenbewegungen des Roboters gemäß der Erfindung ein Effektorwechsel eigenständig und vollautomatisch durchführbar ist, kann die Arbeitsvorrichtung darüber hinaus eine Haltevorrichtung für den Effektor bzw. ein Magazin für mehrere Effektoren umfassen, wobei auf der Haltevorrichtung die Effektoren beweglich durch den Roboter ablegbar bzw. aufnehmbar sind.

In einer bevorzugten Ausführungsform ist zwischen der Haltevorrichtung und dem Werkzeugelement bzw. Effektor eine lineare Führung ausgebildet, die ein einfaches Anheben und Absetzen der Werkzeugelemente durch eine lineare, vertikale Auf- und Abbewegung des Roboters gestattet. In einer Ausgestaltung sind auf der Haltevorrichtung, dort vorzugsweise je nach Bedarf frei anordenbare Führungszapfen vorgesehen, die in entsprechende Bohrungen der Werkzeugelemente bzw. Effektoren eingreifen.

Damit beim Abholen des Werkzeugelements von der Haltevorrichtung die relative Lagebeziehung zwischen dem Werkzeugelement und dem Tragelement eingehalten wird, bevor diese zwecks Verriegelung zu dem Widerlager überführt werden, ist zwischen dem Tragelement und dem Werkzeugelement zumindest ein Mittel zur genauen Lagepositionierung des Werkzeugelements an dem Tragelement vorgesehen. Denkbar sind hierfür Mittel zur Ausrichtung der Lage jeglicher Ausgestaltung, wie beispielsweise Feder-Nut-Verbindungen, Zapfen, Absätze, Vorsprünge und dergleichen.

Die Lage der Haltevorrichtung sowie die jeweiligen Lagen der darauf angeordneten Effektoren, die Lage des oder der Widerlager sowie die Lage der Kupplungselemente sowohl des Effektors als auch des Tragelements, jeweils auch im Verhältnis zur Lage des Roboters, geben die von diesem durchzuführenden Bewegungsabläufe sowie deren Genauigkeit vor. Alle diese Parameter müssen in einem dem Roboter zugeordneten Koordinatensystem berücksichtigt werden, wobei sich die Auswahl der Art der Koordinaten (bspw. kartesische, Zylinder-, Kugelkoordinaten) durch das gewünschte Verhalten des Roboters im hierfür vorgesehenen Aufgabenraum bestimmt, das auf einer entsprechenden Nachgiebigkeitsregelung basiert, weshalb sich Roboter mit einer solchen integrierten Nachgiebigkeitsregelung, insbesondere Roboter der Leichtbauweise, besonders für den Einsatz einer Effektoreinheit und einer Arbeitsvorrichtung gemäß der Erfindung eignen.

In diesem Zusammenhang betrifft die Erfindung daher auch ein vorzugsweise von einem Roboter mit integrierter Nachgiebigkeitsregelung, mit einer intrinsischen Nachgiebigkeit oder mit einer Kombination aus aktiver und passiver Nachgiebigkeit durchführbares Verfahren zum Wechseln eines Effektors an einem Endglied eines solchen Roboters, wobei an dem Endglied des Roboters ein Tragelement vorgesehen ist, mit dem der Effektor über form- und/oder kraftschlüssig ineinander greifende Kupplungselemente befestigbar und mittels eines Verriegelungsmechanismus lösbar und verliersicher verbindbar ist, wobei das Tragelement relativ zu dem Endglied bewegbar ist und wobei die Kupplungselemente in einer gemeinsamen axialen Ausrichtung verbindbar sind, die parallel zu der Bewegungsrichtung des Tragelements angeordnet ist, aufweisend die Schritte:
- Aufnehmen des Effektors von einer Haltevorrichtung unter Verbindung des Kupplungselements des Tragelements mit dem Kupplungselement des Effektors mittels einer ersten Bewegungsabfolge des Roboters unter Ausbildung einer Effektoreinheit;
- Überführen der Effektoreinheit zu einem Widerlager mittels einer zweiten Bewegungsabfolge des Roboters; und
- Bewegen des Verriegelungsmechanismus gegenüber dem Widerlager unter Verriegelung des Tragelements und des Effektors mittels einer dritten Bewegungsabfolge des Roboters.

Nach einer Vollendung der für den Effektor vorgesehenen Tätigkeit, bspw. an einem Förderband oder einer Fließbearbeitungsvorrichtung, an welchem der Roboter die Gegenstände eigenständig zu Bearbeitungszwecken entlang bewegen kann, können sich die folgenden weiteren Schritte anschließen:
- Überführen der Effektoreinheit zu dem oder einem weiteren Widerlager mittels einer vierten Bewegungsabfolge des Roboters;
- Bewegen des Verriegelungsmechanismus gegenüber dem Widerlager unter Entriegelung des Tragelements und des Effektors mittels einer fünften Bewegungsabfolge des Roboters; und
- Ablegen des Effektors auf der Haltevorrichtung unter Entkopplung des Kupplungselements des Trageelements von dem Kupplungselement des Effektors mittels einer sechsten Bewegungsabfolge des Roboters.

Kommt ein Magazin mit mehreren Werkzeugelementen oder Effektoren zum Einsatz, die gegenüber dem Tragelement alle eine universelle Schnittstelle aufweisen, da sie die gleiche Art von Kupplungselementen aufweisen, zeichnet sich das erfindungsgemäße Verfahren weiter dadurch aus, dass die vorhergehend erwähnten Schritte der einzelnen Bewegungsabfolgen des Roboters unter Verwendung mehrerer unterschiedlicher Werkzeugelemente oder Effektoren sequentiell wiederholbar sind.

Weitere Vorteile und Merkmale der Erfindung ergeben sich aus den nachfolgend unter Bezugnahme auf die beiliegenden Darstellungen erläuterten Ausführungsbeispielen. Es zeigen:
- Fig. 1: eine perspektivische Ansicht einer ersten Ausführungsform einer Effektoreinheit gemäß der Erfindung, bei der das Tragelement von dem Effektor getrennt ist;
- Fig. 2: eine Ansicht von hinten des Tragelements dieser Effektoreinheit;
- Fig. 3: eine perspektivische Ansicht einer Arbeitsvorrichtung gemäß der Erfindung mit zwei Effektoreinheiten der ersten Ausführungsform;
- Fig. 4: ein Widerlager gemäß der Erfindung mit Wälzkörpern;
- Fig. 5: eine perspektivische Ansicht einer zweiten Ausführungsform einer Effektoreinheit gemäß der Erfindung, bei der das Tragelement von dem Effektor getrennt ist;
- Fig. 6: eine Ansicht von hinten des Tragelements dieser Effektoreinheit;
- Fig. 7: eine perspektivische Ansicht einer Arbeitsvorrichtung gemäß der Erfindung mit zwei Effektoreinheiten der zweiten Ausführungsform; und
- Fig. 8: eine schematische Darstellung, bei der Effektoreinheiten an einem Endglied eines Roboters angeordnet sind.

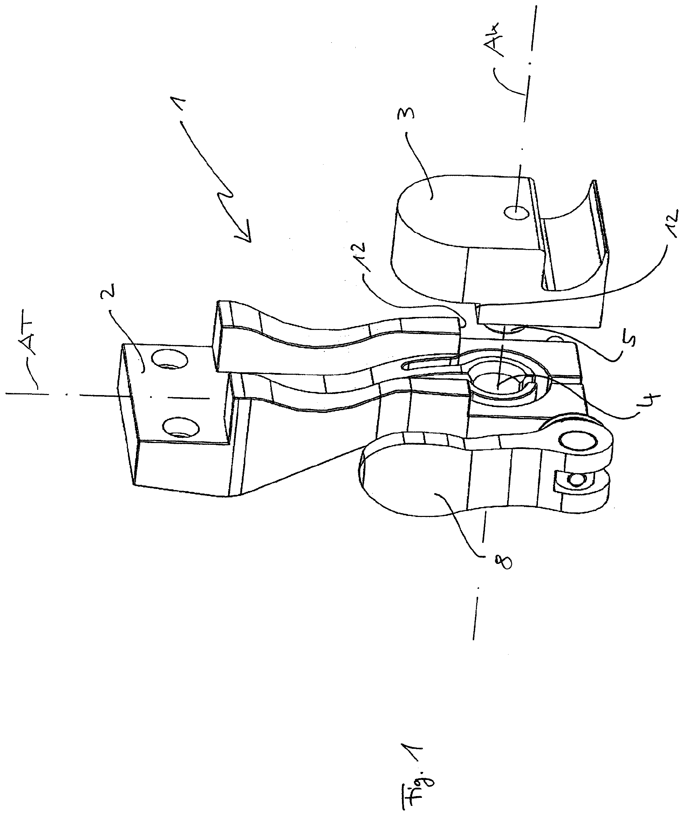

In den Figuren 1 bis 4 ist eine erste Ausführungsform einer Effektoreinheit gemäß der Erfindung gezeigt.

Die Fig. 1 zeigt eine Effektoreinheit 1 in einem nicht zusammengesetzten Zustand, die aus einem Tragelement 2 und einem Effektor 3, im vorliegenden Fall einer Greifbacke, gebildet ist.

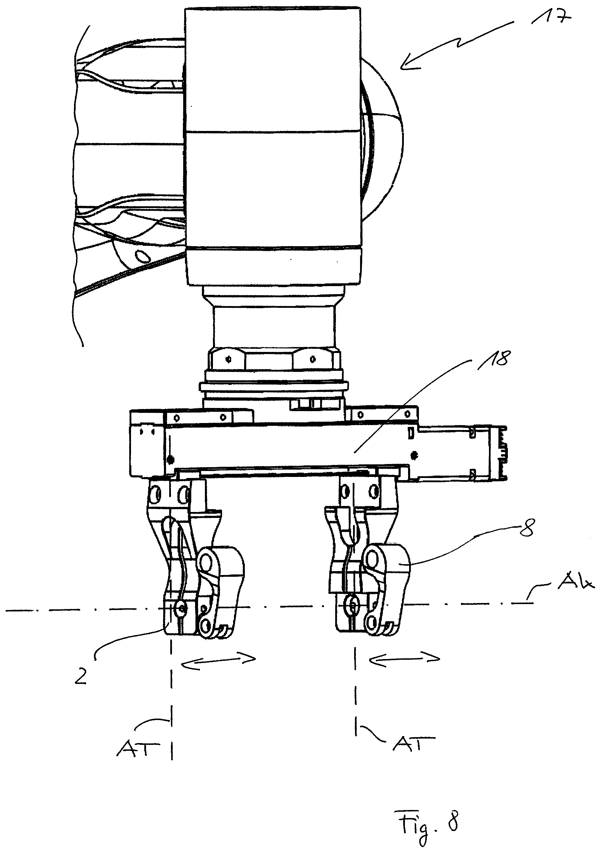

Das Tragelement 2 dient der Befestigung an einem Endglied 17 eines Roboters, wie aus der Fig. 8 zu ersehen ist.

Wie diese Fig. 8 zeigt, bilden zwei einander gegenüberliegende Effektoreinheiten 1 einen Greifmechanismus aus. Hierbei sind zwei Tragelemente 2 über einen entsprechenden Betätigungsmechanismus 18 relativ zueinander linear und damit relativ zu dem Endglied 17 des Roboters bewegbar, was durch die Pfeile symbolisiert ist.

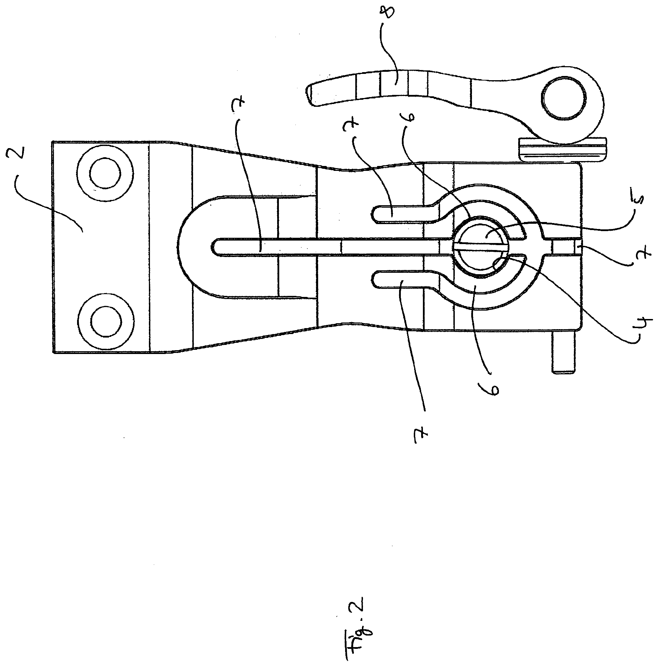

Das Tragelement 2 und die Greifbacke 3 lassen sich über Kupplungselemente miteinander verbinden. Hierzu weist das Tragelement 2 ein Kupplungselement in der Form einer im Wesentlichen kreisrunden Öffnung 4 auf, wie aus der Fig. 2 deutlich wird, wobei in die Öffnung 4 ein entsprechend formkomplementär ausgestaltetes Kupplungselement der Greifbacke 3, ein zylinderförmiger Zapfen 5 eingreifen kann.

Die Kupplungselemente 4 und 5 sind in einer gemeinsamen Achse AK ausgerichtet, die quer zu der Ausrichtung AT der Längserstreckung des Tragelements 2 verläuft, wie schematisch in der Fig. 1 und der Fig. 8 gezeigt ist. Die gemeinsame axiale Ausrichtung AK der Kupplungselemente 4,5 ist dabei parallel zu der linearen Bewegungsrichtung der Tragelemente 2 orientiert (s. Pfeile in der Fig. 8).

Mehrere, ggfs. funktional unterschiedliche Effektoren weisen identische Kupplungselemente 5 auf, so dass im Zusammenwirken mit dem Tragelement 2 eine universelle Kupplungsmechanik zur Verfügung gestellt wird, die einen einfachen Effektorwechsel gestattet. Der Zapfen 5 und der Effektor 3 können dabei vorzugsweise einstückig ausgebildet sein.

Wie aus der Fig. 2 zu ersehen ist, wird die Öffnung 4 von zwei Schenkeln 6 eingeschlossen, die durch Aussparungen 7 im Körper des Tragelements 2 gebildet werden. Die Aussparungen 7 sind dabei so ausgestaltet und dimensioniert, dass die Öffnungsweite der Öffnung 4 veränderlich ist und die Schenkel 6 relativ zueinander eine Federwirkung auszuüben vermögen.

An dem Tragelement 2 ist seitlich ein Verriegelungsmechanismus in der Form eines schwenkbar gelagerten Hebels 8 angeordnet, der im Bereich der freien Enden des Tragelements 2 einen Schnellspannverschluss realisiert.

Durch Betätigung des Hebels 8 werden die Schenkel 6 aufeinander zu, entgegen der Federwirkung bewegt und verspannen so den Zapfen 5 des Effektors 3 in der Öffnung 4.

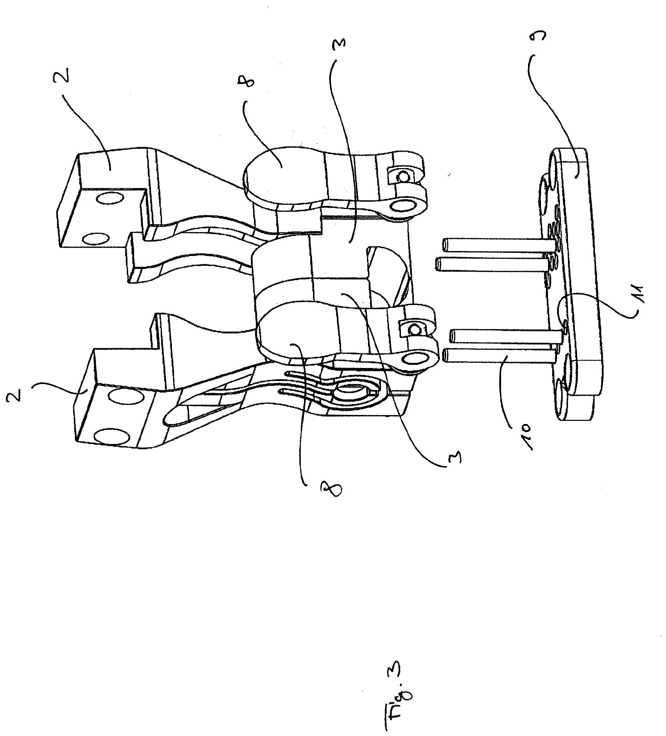

Die Effektoren 3 sind auf einer Haltevorrichtung 9 einer Arbeitsvorrichtung gemäß der Erfindung abgelegt und gelagert, wie die Fig. 3 veranschaulicht.

Die Haltevorrichtung 9 weist hierzu vertikale Zapfen 10 auf, deren Lage sich über diverse Löcher 11 individuell einstellen lässt. Die Zapfen 10 greifen in entsprechende (nicht dargestellte) Bohrungen an der Unterseite der Effektoren 3 mit einer Gleitpassung ein, um so eine lineare, vertikale Führung der Effektoren 3 zu gestatten.

In einer besonderen Ausführungsform gemäß der Erfindung sollen die Effektoreinheiten 1 von einem Roboter genutzt werden, der eine integrierte Nachgiebigkeitsregelung aufweist und dessen Bewegungsabläufe sich entsprechend individuell bspw. unter Berücksichtigung der Impedanzregelung programmieren lassen.

Der Wechsel eines Effektors 3 kann daher wie folgt von statten gehen. Der Roboter bewegt das Tragelement 2 oder zwei einander gegenüberliegende Tragelemente 2 zu der Haltevorrichtung 9, wobei er dann seitlich an den Effektor 3 heranfährt derart, dass der Zapfen 5 von der Öffnung 4 des Tragelements 2 aufgenommen wird, die gemeinsam eine Universalkupplung ausbilden. Dadurch wird die Effektoreinheit 1 ausgebildet, da die Toleranzen zwischen der Öffnung 4 und dem Zapfen 5 eine leichte Aufnahme einerseits und gleichzeitig zu Transportzwecken einen ausreichenden Halt des Effektors 3 an dem Tragelement 2 andererseits gestatten.

Die Effektoreinheit 1 wird dann vertikal angehoben, wobei sie einfach von den Zapfen 10 der Haltevorrichtung 9 abgezogen wird.

Um während dem Verbinden des Tragelements 2 und des Effektors 3 eine genaue Lagepositionierung zwischen den beiden Elementen sicherzustellen, sind an beiden Elementen Mittel zur Lagepositionierung, hier in der Form von aneinandergrenzenden Absätzen 12, vorgesehen, so dass eine Fehljustierung der Greiferbacke 3 ausgeschlossen bleibt.

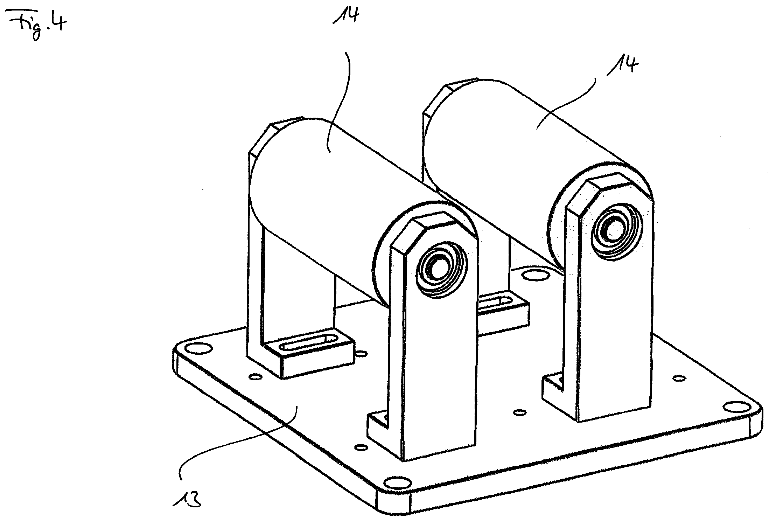

Nach dem Anheben der Effektoreinheit 1 bewegt der Roboter diese zu einem stationär angeordneten Widerlager 13, wie dieses aus der Fig. 4 zu ersehen ist.

Das Widerlager 13 weist Rollen oder Wälzkörper 14 auf. Die Wälzkörper 14 bilden ein passives Bestätigungselement aus, das den vorgesehenen Schnellspannmechanismus schließt, indem die Hebel 8 linear zwischen den Wälzkörpern 14 eingeführt werden. Der Hebel 8 weist dabei eine solche Kontur auf, dass bei der Einführbewegung der Effektoreinheit 1 die Wälzkörper 14 auf einfache Weise an dem Hebel 8 entlang abrollen und so die Schließkraft auf den Hebel 8 und damit über den Schnellspannmechanismus auf die Öffnung 4 im Vergleich zu der in Richtung der linearen Einführbewegung aufgebrachten Kraft deutlich erhöht wird. Der Roboter muss daher keine seitliche, eine entsprechende Kraft erzeugende Bewegung ausführen. Der Programmieraufwand wird einfach gehalten, da lediglich eine Linearbewegung vom Roboter vollführt werden muss.

Alternativ ist es jedoch auch möglich, dass der Roboter den Hebel 8 auch auf einfache Art und Weise durch Anlage an einer beliebigen Oberfläche über eine entsprechende Bewegung, Kraftregelung und/oder Kraftvorsteuerung schließt.

Ist dadurch dann der Zapfen 5 des Effektors 3 verliersicher in der Öffnung 4 des Tragelements 2 verspannt, kann die Effektoreinheit 1 ihrer funktionalen Bestimmung zugeführt werden.

Der Hebel 8 ist dabei auch so gestaltet, dass er zur Not von einem Benutzer per Hand geschlossen werden kann. Denkbar sind auch aktive Aktuatoren, wie pneumatisch oder hydraulisch aktivierte Stößel, die an dem Hebel 8 angreifen und diesen in die Schließstellung umlenken.

Beim Lösen des Verriegelungsmechanismus erfolgen die vorhergehend erwähnten Schritte im Prinzip in umgekehrter Reihenfolge. Der Roboter kann sich dabei allerdings zu einem weiteren (nicht dargestellten) Widerlager bewegen und mit dem freien Ende des Hebels 8 daran angreifen, beispielsweise an einer Kante, und den Hebel 8 durch eine entsprechende, von dem Widerlager weg gerichtete Bewegung auf einfache Art und Weise aufziehen.

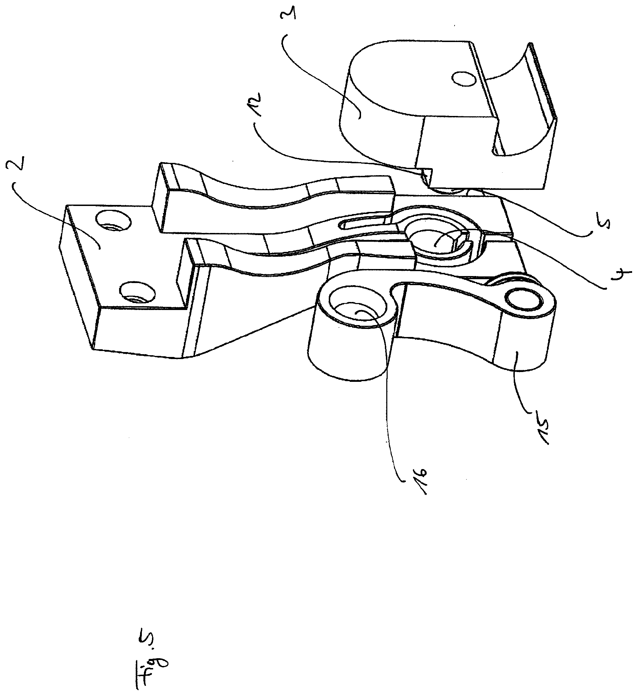

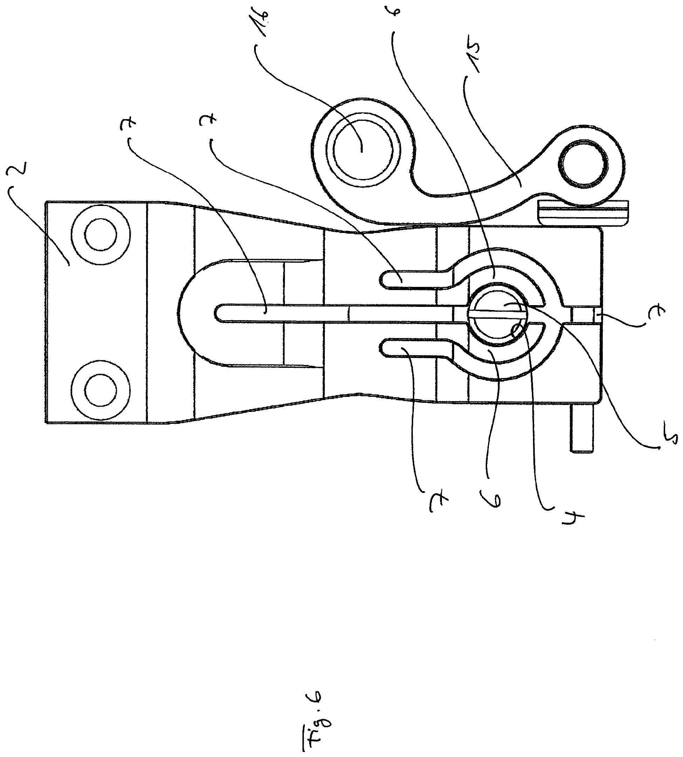

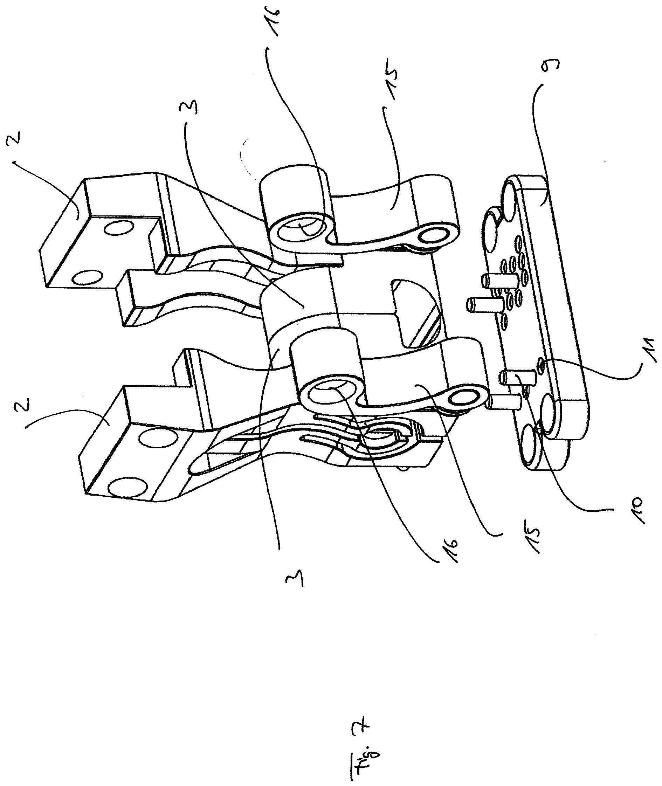

In den Figuren 5 bis 7 ist eine zweite Ausführungsform der Effektoreinheit 1 gemäß der Erfindung gezeigt, die im Prinzip in funktionaler Hinsicht identisch ausgebildet ist, mit dem Unterschied, dass ein Hebel 15 vorgesehen ist, der einen anderen Konturverlauf aufweist.

Der Hebel 15 eignet sich auch für eine Anlage an einem Widerlager 13 zu Zwecken des Verschließens des Verriegelungsmechanismus.

Für ein Öffnen weist der Hebel 15 an seinem freien Ende eine durchgehende Eingriffsöffnung 16 auf. Der Roboter kann hierfür einen programmierten Bewegungsablauf durchlaufen, bei dem er die Effektoreinheit 1 seitlich auf einen (nicht gezeigten) stationär gelagerten, in einer vorzugsweise horizontalen Richtung ausgerichteten Zapfen oder Stab unter Eingriff in die Eingriffsöffnung 16 aufschiebt, und die Effektoreinheit 1 von diesem Zapfen wegbewegt, wodurch der Hebel 15 geöffnet wird.

In der Fig. 8 ist schematisch die Anordnung von zwei Effektoreinheiten 1 an einem Endglied 17 des Roboters gezeigt, die einen Greifmechanismus ausbilden.

Um den Werkzeugwechsel bei den oben erwähnten Ausführungsformen zu bewerkstelligen, ist es vorgesehen, dass die Kupplungselemente des Tragelements 2 und die Kupplungselemente des Effektors 3, unabhängig von deren Ausgestaltung, in einer gemeinsamen axialen Ausrichtung AK liegen, die in der Fig. 8 schematisch dargestellt ist. Diese Ausrichtung AK der Kupplungselemente ist gemäß der Erfindung quer zu der Ausrichtung AT des Tragelements 2 angeordnet, die ebenfalls in der Fig. 8 schematisch dargestellt ist, und entspricht der Bewegungsrichtung der Tragelemente 2 (s. Pfeile), mitunter also auch der Richtung der durch die Greiferbacken 3 aufzubringenden Greif- und Haltekraft für die zu greifenden Gegenstände.

## Patentansprüche

1. Effektoreinheit für einen Roboter mit zumindest einem an einem Endglied (17) des Roboters angeordneten Tragelement (2), mit einem Effektor (3), der an dem Tragelement (2) über form- und/oder kraftschlüssig ineinander greifende Kupplungselemente (4,5) befestigbar ist, und mit einem Verriegelungsmechanismus (8;15), der ein Kupplungselement (5) des Effektors (3) mit einem Kupplungselement (4) des Tragelements (2) lösbar und verliersicher verbindet, wobei das Tragelement (2) relativ zu dem Endglied (17) bewegbar angeordnet ist, und wobei die Kupplungselemente (4,5) in einer gemeinsamen axialen Ausrichtung (AK) verbindbar sind, die quer zu der Ausrichtung (AT) des Tragelements (2) angeordnet ist,
**dadurch gekennzeichnet, dass**
die Kupplungselemente (4,5) so angeordnet und ausgebildet sind, dass sie mittels einer rotatorischen Verlagerungsbewegung des Roboters um die axiale Ausrichtung (AK) und/oder mittels einer translatorischen Verlagerungsbewegung des Roboters entlang der axialen Ausrichtung (AK) miteinander verbindbar oder wieder entkoppelbar sind.

2. Effektoreinheit nach Anspruch 1, bei der der Verriegelungsmechanismus (8;15) an dem Tragelement (2) derart frei zugänglich angeordnet ist, dass er von einem externen Widerlager (13,14) aktiv oder passiv betätigbar ist.

3. Effektoreinheit nach Anspruch 2, bei der der Verriegelungsmechanismus (8,15) so ausgebildet ist, dass er unter Anlage an ein Widerlager (13,14) durch eine Verlagerungsbewegung des Roboters betätigbar ist.

4. Effektoreinheit nach Anspruch 2 oder 3, bei der der Verriegelungsmechanismus (8,15) so ausgebildet ist, dass er unter einem lösbaren Eingriff mit einem Widerlager durch eine Verlagerungsbewegung des Roboters betätigbar ist.

5. Effektoreinheit nach einem der Ansprüche 1 bis 4, bei der das Kupplungselement des Tragelements (2) als eine Öffnung (4) zur Aufnahme des Kupplungselements (5) des Effektors (3) mit einer durch den Verriegelungsmechanismus (8,15) veränderlichen Öffnungsweite ausgebildet ist.

6. Effektoreinheit nach Anspruch 5, bei der die Öffnung (4) zumindest teilweise von zwei zueinander beweglichen Schenkeln (6) des Tragelements (2) eingeschlossen ist.

7. Effektoreinheit nach Anspruch 6, bei der die Schenkel (6) ausgebildet sind, um gegenseitig eine Federwirkung auszuüben, wobei mittels des Verriegelungsmechanismus (8,15) die Schenkel (6) entgegen der Federwirkung bewegbar sind.

8. Effektoreinheit nach Anspruch 7, bei der die Federwirkung durch Aussparungen (7) im Tragelement (2) erzeugbar ist.

9. Effektoreinheit nach einem der Ansprüche 1 bis 8, bei der die Kupplungselemente (4,5) zumindest abschnittsweise eine komplementäre Zylinder-, Keil- oder Konusform aufweisen.

10. Effektoreinheit nach einem der Ansprüche 1 bis 4, bei der zwischen den Kupplungselementen (4,5) zumindest ein Rastmechanismus vorgesehen ist.

11. Effektoreinheit nach Anspruch 10, bei der die Kupplungselemente (4,5) als ein Bajonettverschlussmechanismus ausgebildet sind.

12. Effektoreinheit nach einem der Ansprüche 1 bis 4, bei der die Kupplungselemente (4,5) als eine Schraubverbindung ausgebildet sind.

13. Effektoreinheit nach einem der Ansprüche 2 bis 12, bei der der Verriegelungsmechanismus als ein an dem Tragelement (2) schwenkbar gelagerter Hebel (8,15) ausgebildet ist.

14. Effektoreinheit nach Anspruch 13, bei der der Hebel (8,15) eine Kontur aufweist, die so ausgebildet ist, dass der Hebel (8,15) an einem Widerlager (14) kontinuierlich entlang bewegt werden kann.

15. Effektoreinheit nach Anspruch 13 oder 14, bei der der Hebel (15) eine Eingriffsöffnung (16) für das Betätigungselement aufweist.

16. Effektoreinheit nach einem der Ansprüche 1 bis 15, bei der zwischen dem Tragelement (2) und dem Effektor (3) zumindest ein Mittel (12) zur genauen Lagepositionierung des Effektors (3) während des Kupplungsvorgangs vorgesehen ist.

17. Roboter aufweisend eine Effektoreinheit nach einem der Ansprüche 1 bis 16.

18. Arbeitsvorrichtung mit einem Roboter der eine Effektoreinheit (1) aufweist, **dadurch gekennzeichnet, dass** die Effektoreinheit (1) nach mindestens einem der Ansprüche 1 bis 16 ausgebildet ist.

19. Arbeitsvorrichtung nach Anspruch 18, bei der eine Haltevorrichtung (9) für den Effektor (3) vorgesehen ist, auf der der Effektor (3) beweglich ablegbar ist.

20. Arbeitsvorrichtung nach Anspruch 19, bei der zwischen der Haltevorrichtung (9) und dem Effektor (3) eine lineare Führung ausgebildet ist.

21. Arbeitsvorrichtung nach einem der Ansprüche 18 bis 20, bei der ein Widerlager (13,14) vorgesehen ist, das mit der Effektoreinheit (1) bei einer Verlagerungsbewegung des Roboters zusammenwirkt.

22. Arbeitsvorrichtung nach Anspruch 21, bei der das Widerlager (13,14) zumindest teilweise formkomplementär zu dem Verriegelungsmechanismus (8,15) der Effektoreinheit (1) ausgebildet ist.

23. Arbeitsvorrichtung nach Anspruch 22, bei der das Widerlager als zumindest ein Wälzkörper (14) ausgebildet ist.

24. Verfahren zum Wechseln eines Effektors (3) an einem Endglied (17) eines Roboters, wobei an dem Endglied (17) des Roboters ein Tragelement (2) vorgesehen ist, mit dem der Effektor (3) über form- und/oder kraftschlüssig ineinander greifende Kupplungselemente (4,5) befestigbar ist, die mittels eines Verriegelungsmechanismus (8,15) lösbar und verliersicher verbindbar sind, wobei das Tragelement (2) relativ zu dem Endglied (17) bewegbar ist, und wobei die Kupplungselemente (4,5) in einer gemeinsamen axialen Ausrichtung (AK) verbindbar sind, die parallel zu der Bewegungsrichtung des Tragelements (2) angeordnet ist,
aufweisend die Schritte:
- Aufnehmen des Effektors (3) von einer Haltevorrichtung (9) unter Verbindung des Kupplungselements (4) des Tragelements (2) mit dem Kupplungselement (5) des Effektors (3) mittels einer ersten Bewegungsabfolge des Roboters unter Ausbildung einer Effektoreinheit (1);
- Überführen der Effektoreinheit (1) zu einem Widerlager (13,14) mittels einer zweiten Bewegungsabfolge des Roboters; und
- Bewegen des Verriegelungsmechanismus (8,15) gegenüber dem Widerlager (13,14) unter Verriegelung des Tragelements (2) und des Effektors (3) der Effektoreinheit (1) mittels einer dritten Bewegungsabfolge des Roboters.

25. Verfahren nach Anspruch 24, nach einer Vollendung der für den Effektor (3) vorgesehenen Tätigkeit, weiter aufweisend die Schritte:
- Überführen der Effektoreinheit (1) zu dem oder einem weiteren Widerlager mittels einer vierten Bewegungsabfolge des Roboters;
- Bewegen des Verriegelungsmechanismus (8,15) gegenüber dem Widerlager unter Entriegelung des Tragelements (2) und des Effektors (3) der Effektoreinheit (1) mittels einer fünften Bewegungsabfolge des Roboters; und
- Ablegen des Effektors (3) auf der Haltevorrichtung (9) unter Entkopplung des Kupplungselements (4) des Tragelements (2) von dem Kupplungselement (5) des Effektors (3) mittels einer sechsten Bewegungsabfolge des Roboters.

26. Verfahren nach Anspruch 24 oder 25, bei dem die Schritte der einzelnen Bewegungsabfolgen des Roboters unter Verwendung mehrerer unterschiedlicher Effektoren (3) sequentiell wiederholbar sind.

## Claims

1. Effector unit for a robot having at least one supporting element (2) arranged at an end member (17) of the robot, having an effector (3) which can be fastened to the supporting element (2) by means of coupling elements (4,5) engaging into one another in a form-fit and/or force-fit manner, and having a locking mechanism (8; 15) which connects a coupling element (5) of the effector (3) to a coupling element (4) of the supporting element (2) in a detachable and loss-proof manner, in which the supporting element (2) is movably arranged relative to the end member (17), and in which the coupling elements (4, 5) can be connected in a common axial alignment (AK) which is arranged traverse to the orientation (AT) of the supporting element (2).
**characterized in that**
the coupling elements (4,5) are arranged and configured such so as to be connected or decoupled by a rotational displacement movement of the robot around the axial alignment (AK) and/or by a translational displacement movement of the robot along the axial alignment (AK).

2. Effector unit according to claim 1, in which the locking mechanism (8,15) is arranged on the supporting element (2) in such a free accessible way that it can be actuated actively or passively by an external abutment element (13,14).

3. Effector unit according to claim 2, in which the locking mechanism (8,15) is designed such that it can be actuated under contact with an abutment (13,14) by a displacement movement of the robot.

4. Effector unit according to claim 2 or 3, in which the locking mechanism (8,15) is designed such that it can be actuated by a displacement movement of the robot under a releasable engagement with an abutment.

5. Effector unit according to one of claims 1 to 4, in which the coupling element of the supporting element (2) is formed as an opening (4) for receiving the coupling element (5) of the effector (3) with an opening width to be varied by the locking mechanism (8,15).

6. Effector unit according to claim 5, in which the opening (4) is at least partially enclosed by two legs (6) of the supporting element (2), which are moveable relative to each other.

7. Effector unit according to claim 6, in which the legs (6) are designed to exert a mutual spring action, the legs (6) being movable against the spring action by means of the locking mechanism (8,15).

8. Effector unit according to claim 7, in which the spring effect can be produced by recesses (7) in the supporting element (2).

9. Effector unit according to any one of claims 1 to 8, in which the coupling elements (4,5) have a complementary cylinder, wedge or cone shape at least in sections.

10. Effector unit according to any of claims 1 to 4, in which at least one detent mechanism is provided between the coupling elements (4,5).

11. Effector unit according to claim 10, in which the coupling elements (4,5) are formed as a bayonet locking mechanism.

12. Effector unit according to any of claims 1 to 4, in which the coupling elements (4,5) are formed as a screw connection.

13. Effector unit according to any of claims 2 to 12, in which the locking mechanism is formed as a lever (8,15) pivotably mounted on the supporting element (2).

14. Effector unit according to claim 13, in which the lever (8,15) has a contour which can be moved continuously along an abutment (14).

15. Effector unit according to claim 13 or 14, in which the lever (15) has an engagement opening (16) for the actuating element.

16. Effector unit according to any of claims 1 to 15, in which at least one means (12) is provided between the supporting element (2) and the effector (3) for precisely positioning the effector (3) during the coupling process.

17. Robot comprising an effector unit according to any one of claims 1 to 16.

18. Working device with a robot having at least one effector unit (1), **characterized in that** the effector unit (1) is designed according to at least one of claims 1 to 16.

19. Working device according to claim 18, in which a holding device (9) for the effector (3) is provided, on which the effector (3) can be movably deposited.

20. Working device according to claim 19, in which a linear guide is formed between the holding device (9) and the effector (3).

21. Working device according to any of claims 18 to 20, in which an abutment (13,14) is provided which interacts with the effector unit (1) during a displacement movement of the robot.

22. Working device according to claim 21, in which the abutment (13,14) is formed at least partially complementary in shape to the locking mechanism (8,15) of the effector unit (1) .

23. Working device according to claim 22, in which the abutment is constructed as at least one rolling element (14).

24. Method for changing an effector (3) on an end member (17) of a robot, wherein a supporting element (2) is provided on the end member (17) of the robot, with which the effector (3) can be fastened by means coupling elements (4,5) in a form-fit and/or force-fit manner, which are releasably and captively connectable by means of a locking mechanism (8,15), wherein the supporting element (2) is movable relative to the end member (17), and wherein the coupling elements (4, 5) are connectable in a common axial alignment (AK) which is arranged in parallel to the moving direction of the supporting element (2) ;
comprising the steps of:
- picking up the effector (3) from a holding device (9) by connecting the coupling element (4) of the supporting element (2) to the coupling element (5) of the effector (3) by means of a first sequence of robot movements to form an effector unit (1);
- transferring the effector unit (1) to an abutment (13, 14) by means of a second sequence of robot movements; and
- moving the locking mechanism (8,15) with respect to the abutment (13,14) while locking the supporting element (2) and the effector (3) of the effector unit (1) by means of a third sequence of robot movements.

25. Method according to claim 24, after completion of the activity intended for the effector (3), further comprising the steps:
- transferring the effector unit (1) to the or a further abutment by means of a fourth sequence of robot movements;
- moving the locking mechanism (8,15) with respect to the abutment by unlocking the supporting member (2) and the effector (3) of the effector unit (1) by means of a fifth sequence of robot movements; and
- placing the effector (3) on the holding device (9) by decoupling the coupling element (4) of the supporting element (2) from the coupling element (5) of the effector (3) by means of a sixth movement of robot movements.

26. Method according to claim 24 or 25, in which the steps of the individual sequences of the robot movements are sequentially repeatable using a plurality of different effectors (3).

## Revendications

1. Unité d'effecteur pour un robot avec au moins un élément de support (2) disposé sur un organe d'extrémité (17) du robot, avec un effecteur (3) qui peut être fixé sur l'élément de support (2) par le biais d'éléments d'accouplement (4, 5) qui viennent s'emboîter l'un dans l'autre par complémentarité de forme et/ou de force, et avec un mécanisme de verrouillage (8 ; 15) qui relie de manière détachable et imperdable un élément d'accouplement (5) de l'effecteur (3) à un élément d'accouplement (4) de l'élément de support (2), l'élément de support (2) étant disposé mobile par rapport à l'organe d'extrémité (17) et les éléments d'accouplement (4, 5) pouvant être reliés dans une orientation axiale commune (AK) qui est disposée transversalement à l'orientation (AT) de l'élément de support (2),
**caractérisé en ce que**
les éléments d'accouplement (4, 5) sont disposés et configurés de telle sorte qu'ils peuvent être reliés ensemble ou être redécouplés l'un de l'autre à l'aide d'un mouvement de déplacement en rotation du robot autour de l'orientation axiale (AK) et/ou à l'aide d'un mouvement de déplacement en translation du robot le long de l'orientation axiale (AK).

2. Unité d'effecteur selon la revendication 1, dans laquelle le mécanisme de verrouillage (8 ; 15) est disposé sur l'élément de support (2) de manière librement accessible de telle sorte qu'il peut être actionné de manière active ou passive par un palier externe (13, 14).

3. Unité d'effecteur selon la revendication 2, dans laquelle le mécanisme de verrouillage (8 ; 15) est configuré de telle sorte qu'il peut être actionné par un mouvement de déplacement du robot selon un agencement sur un palier (13, 14).

4. Unité d'effecteur selon la revendication 2 ou 3, dans laquelle le mécanisme de verrouillage (8, 15) est configuré de telle sorte qu'il peut être actionné par un mouvement de déplacement du robot selon un emboîtement détachable avec un palier.

5. Unité d'effecteur selon une des revendications 1 à 4, dans laquelle l'élément d'accouplement de l'élément de support (2) est configuré sous la forme d'une ouverture (4) pour recevoir l'élément d'accouplement (5) de l'effecteur (3) avec une largeur d'ouverture modifiable par le mécanisme de verrouillage (8, 15).

6. Unité d'effecteur selon la revendication 5, dans laquelle l'ouverture (4) est enclavée au moins partiellement par deux branches (6) de l'élément de support (2) qui sont mobiles l'une par rapport à l'autre.

7. Unité d'effecteur selon la revendication 6, dans laquelle les branches (6) sont configurées pour exercer une action de ressort réciproquement, les branches (6) étant mobiles sous l'action du ressort à l'aide du mécanisme de verrouillage (8, 15) .

8. Unité d'effecteur selon la revendication 7, dans laquelle l'action de ressort peut être produite à travers des évidements (7) dans l'élément de support (2).

9. Unité d'effecteur selon une des revendications 1 à 8, dans laquelle les éléments d'accouplement (4, 5) présentent au moins par sections une forme complémentaire cylindrique, cunéiforme ou conique.

10. Unité d'effecteur selon une des revendications 1 à 4, dans laquelle entre les éléments d'accouplement (4, 5) au moins un mécanisme d'enclenchement est prévu.

11. Unité d'effecteur selon la revendication 10, dans laquelle les éléments d'accouplement (4, 5) sont configurés sous la forme d'un mécanisme de fermeture à baïonnette.

12. Unité d'effecteur selon une des revendications 1 à 4, dans laquelle les éléments d'accouplement (4, 5) sont configurés sous la forme d'une liaison par vis.

13. Unité d'effecteur selon une des revendications 2 à 12, dans laquelle le mécanisme de verrouillage est configuré sous la forme d'un levier (8, 15) monté pivotant sur l'élément de support (2).

14. Unité d'effecteur selon la revendication 13, dans laquelle le levier (8, 15) présente un contour qui est configuré de telle sorte que le levier (8, 15) peut être déplacé de manière continue le long d'un palier (14).

15. Unité d'effecteur selon la revendication 13 ou 14, dans laquelle le levier (15) présente une ouverture d'emboîtement (16) pour l'élément d'actionnement.

16. Unité d'effecteur selon une des revendications 1 à 15, dans laquelle entre l'élément de support (2) et l'effecteur (3) au moins un moyen (12) est prévu pour le positionnement précis en position de l'effecteur (3) pendant le processus d'accouplement.

17. Robot présentant une unité d'effecteur selon une des revendications 1 à 16.

18. Dispositif de travail avec un robot qui présente une unité d'effecteur (1), **caractérisé en ce que** l'unité d'effecteur (1) est configurée selon au moins une des revendications 1 à 16.

19. Dispositif de travail selon la revendication 18, dans laquelle un moyen de retenue (9) pour l'effecteur (3) est prévu, sur lequel l'effecteur (3) peut être déposé de manière mobile.

20. Dispositif de travail selon la revendication 19, dans laquelle entre le moyen de retenue (9) et l'effecteur (3) un guidage linéaire est configuré.

21. Dispositif de travail selon une des revendications 18 à 20, dans laquelle un palier (13, 14) est prévu et coopère avec l'unité d'effecteur (1) lors d'un mouvement de déplacement du robot.

22. Dispositif de travail selon la revendication 21, dans laquelle le palier (13, 14) est configuré au moins en partie dans une forme complémentaire au mécanisme de verrouillage (8, 15) de l'unité d'effecteur (1).

23. Dispositif de travail selon la revendication 22, dans laquelle le palier est configuré sous la forme d'au moins un élément de roulement (14).

24. Procédé destiné à changer un effecteur (3) sur un organe d'extrémité (17) d'un robot, dans lequel sur l'organe d'extrémité (17) du robot est prévu un élément de support (2) avec lequel l'effecteur (3) peut être fixé par le biais d'éléments d'accouplement (4, 5) qui viennent s'emboîter l'un dans l'autre par complémentarité de forme et/ou de force et qui peut être relié à l'aide d'un mécanisme de verrouillage (8, 15) de manière détachable et imperdable, l'élément de support (2) étant mobile par rapport à l'organe d'extrémité (17), et les éléments d'accouplement (4, 5) pouvant être reliés dans une orientation axiale commune (AK) qui est disposée parallèlement à la direction de mouvement de l'élément de support (2),
présentant les étapes :
- réception de l'effecteur (3) par un moyen de retenue (9) en liaison avec l'élément d'accouplement (4) de l'élément de support (2) avec l'élément d'accouplement (5) de l'effecteur (3) à l'aide d'une première séquence de mouvements du robot en instruisant une unité d'effecteur (1) ;
- transfert de l'unité d'effecteur (1) vers un palier (13, 14) à l'aide d'une deuxième séquence de mouvements du robot ; et
- mouvement du mécanisme de verrouillage (8, 15) vis-à-vis du palier (13, 14) en verrouillant l'élément de support (2) et l'effecteur (3) de l'unité d'effecteur (1) à l'aide d'une troisième séquence de mouvements du robot.

25. Procédé selon la revendication 24, après achèvement de l'activité prévue pour l'effecteur (3), présentant en outre les étapes :
- transfert de l'unité d'effecteur (1) vers le palier ou un autre à l'aide d'une quatrième séquence de mouvements du robot;
- mouvement du mécanisme de verrouillage (8, 15) vis-à-vis du palier en déverrouillant l'élément de support (2) et l'effecteur (3) de l'unité d'effecteur (1) à l'aide d'une cinquième séquence de mouvements du robot ; et
- dépose de l'effecteur (3) sur le moyen de retenue (9) en déverrouillant l'élément d'accouplement (4) de l'élément de support (2) par rapport à l'élément d'accouplement (5) de l'effecteur (3) à l'aide d'une sixième séquence de mouvements du robot.

26. Procédé selon la revendication 24 ou 25, dans lequel les étapes de séquences de mouvements individuelles du robot peuvent être répétées de manière séquentielle en utilisant plusieurs effecteurs (3) différents.
